## Europäisches Patentamt
## European Patent Office
## Office européen des brevets

(19)

(11) Numéro de publication: **0 037 334**
**B1**

(12)

# FASCICULE DE BREVET EUROPEEN

(45) Date de publication du fascicule du brevet: **12.09.84**

(51) Int. Cl.³: **F 16 K 17/08,** F 16 K 17/04, F 16 K 27/02, F 16 K 17/168

(21) Numéro de dépôt: **81400489.1**

(22) Date de dépôt: **27.03.81**

(54) Dispositif à vanne d'isolement à protection contre surpressions.

(30) Priorité: **02.04.80 FR 8007459**

(43) Date de publication de la demande: **07.10.81 Bulletin 81/40**

(45) Mention de la délivrance du brevet: **12.09.84 Bulletin 84/37**

(84) Etats contractants désignés: **BE DE GB IT SE**

(56) Documents cités:
**DE-A-2 430 725**
**DE-C- 426 893**
**FR-A-1 304 153**
**FR-A-2 103 729**
**GB-A-1 455 180**
**US-A-1 146 723**
**US-A-3 850 405**

(73) Titulaire: **ELECTRICITE DE FRANCE Service National**
**2, rue Louis Murat**
**F-75008 Paris (FR)**
(73) Titulaire: **SOCIETE D'EXPLOITATION DE BREVETS POUR L'INDUSTRIE ET LA MARINE (SEBIM)**
**14, Lotissement du Pati**
**F-13500 Martigues (FR)**

(72) Inventeur: **Chabat-Courrede, Jean**
**31, rue du Docteur Emile Bergeron**
**F-77250 Moret sur Loing (FR)**
Inventeur: **Gemignani, François**
**14, Lotissement du Pati**
**F-13500 Martigues (FR)**

(74) Mandataire: **Mongrédien, André et al**
**c/o BREVATOME 25, rue de Ponthieu**
**F-75008 Paris (FR)**

EP 0 037 334 B1

Courier Press, Leamington Spa, England.

**Description**

La présente invention se rapporte à un dispositif d'isolement à soupape de sûreté tarée prévu pour être disposé dans un circuit en amont d'une soupape de sûreté afin de permettre l'isolement de cette dernière au cas où elle resterait accidentellement bloquée en position ouverte.

Les défauts de fonctionnement des soupapes de sûreté à la fermeture peuvent avoir des conséquences désastreuses puisqu'elles conduisent à la fois à une chute de la pression dans le circuit qu'elles sont chargées de surveiller et à un échappement incontrôlé du fluide contenu dans ce circuit. Tel est notamment le cas lorsque de tels défauts se produisent sur certaines soupapes équipant le circuit de refroidissement primaire d'une centrale nucléaire. En effet, la non fermeture de ces soupapes peut alors être considérée comme une brèche de ce circuit primaire à laquelle il est nécessaire de remédier efficacement dans des délais aussi brefs que possible.

On ne connait à ce jour aucune solution satisfaisante à ce problème.

Ainsi, s'il est connu de protéger un robinet de décharge en disposant une vanne en amont de ce robinet, cette solution ne peut pas être transposée à la protection d'une soupape de sûreté pour des raisons de sécurité évidentes. En effet, l'isolement pur et simple de la soupape défaillante conduirait à supprimer la protection du circuit de surpression. De plus, une manoeuvre intempestive de la vanne d'isolement en fonctionnement normal aboutirait au même résultat.

Par ailleurs, on connaît du brevet US—A— 1 146 723 un dispositif d'isolement prévu pour être disposé dans un circuit et comprenant un clapet susceptible de venir én appui étanche sur un siège de valve formé dans ledit circuit, des moyens de neutralisation ou de commande maintenant normalement le clapet éloigné de son siège, ces moyens pouvant être actionnés pour amener le clapet en appui étanche contre son siège lorsqu'il est nécessaire d'isoler le circuit, et des moyens de tarage agissant sur ledit clapet lorsqu'il est en appui étanche contre son siège pour lui permettre de s'éloigner de ce dernier lorsque la pression en amont du dispositif d'isolement dépasse une valeur prédéterminée, les moyens de neutralisation comprenant un système mécanique et comportant un premier organe solidaire du clapet et un deuxième organe mobile selon le sens de déplacement du clapet sous l'action des moyens de neutralisation, une liaison avec jeu étant prévue entre lesdits organes pour permettre normalement au deuxième organe d'agir sur le premier organe afin de maintenir le clapet éloigné de son siège et pour permettre au premier organe de se déplacer par rapport au deuxième organe lorsque le clapet se déplace en éloignement de son diège à l'encontre des moyens de tarage lorsque la pression en amont du dispositif d'isolement dépasse ladite valeur prédéterminée après la mise en oeuvre desdits moyens de neutralisation, les moyens de tarage comprenant des moyens élastiques disposés entre le premier organe et le deuxième organe.

Ce dispositif présente l'inconvénient que des battements peuvent se produire lorsque le clapet est amené en contact étanche avec son siège et lorsque la pression amont excède la pression de tarage.

L'invention a pour objet un dispositif d'isolement comparable, mais comprenant de plus un amortisseur hydraulique permettant d'amortir les battements.

L'invention, telle qu'elle est caractérisée dans les revendications 1 ou 2, resout le problème des battements du clapet.

Dans chacune de ces variantes de réalisation de l'invention, la première chambre peut communiquer avec la deuxième chambre par l'intermédiaire d'au moins un diaphragme.

On décrira maintenant, à titre d'exemple non limitatif, différentes variantes de réalisation de l'invention en se référant aux dessins annexés dans lesquels:

— la figure 1 est une vue en coupe longitudinale d'un dispositif connu d'isolement dans lequel le tarage du clapet est obtenu au moyen de rondelles Belleville,

— la figure 2 est une vue fragmentaire en coupe longitudinale comparable à la figure 1 montrant un dispositif d'isolement du même type que celui de la figure 1, mais comprenant conforme à l'invention un amortisseur hydraulique destiné à supprimer les battements du clapet, et

— la figure 3 est une vue fragmentaire en coupe longitudinale comparable à la figure 2, illustrant une variante de réalisation de l'invention dans laquelle le tarage du clapet est obtenu au moyen de gaz sous pression agissant par l'intermédiaire d'un fluide hydraulique.

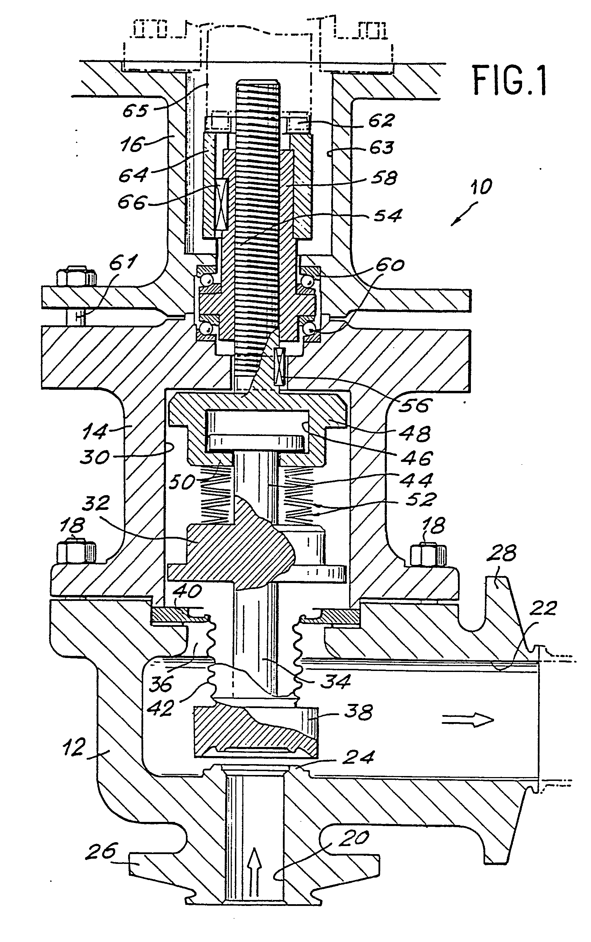

Le dispositif d'isolement 10 représenté sur la figure 1 comprend un boîtier en plusieurs parties 12, 14 et 16. La première partie 12 du boîtier est prévue puor être insérée dans une conduite (non représentée) en amont d'une soupape de sureté (non représentée) à protéger. A cet effet, la partie 12 comprend un passage défini par un orifice d'entrée du fluide 20 et par un orifice de sortie du fluide 22, l'orifice 22 étant de plus grand diamètre et disposé à angle droit par rapport à l'orifice 20, de telle sorte que ce dernier débouche dans l'orifice 22 en formant à se périperie un siège de valve 24. De plus, la partie 12 du boîtier est munie de brides 26 et 28 disposées autour des orifices 20 et 22 afin de permettre le raccordement de cette partie 12 aux parties adjacentes du circuit.

La partie 14 du boîtier est fixée à la partie 12 par des tirants 18 et centrée sur cette dernière par un embrèvement, de telle sorte que l'axe d'un alésage 30 ménagé dans la partie 14 soit aligné avec l'axe de l'orifice d'entrée 20. Un disque 32 est reçu de façon coulissante à l'intérieur de l'alésage 30 et comporte une partie en saillie 34 qui s'étend au travers d'une ouverture 36 formée dans la partie 12 du boîtier pour supporter par son extrémité un clapet 38 disposé en vis à vis du siège de valve 24. Une rondelle 40 pincée entre les parties 12 et 14 du boîtier supporte une extrémité d'un soufflet d'étanchéité 42 disposé autour de la partie en saillie 34 et dont l'autre extrémité est fixée au clapet 38.

Du côté opposé à la partie en saillie 34, le disque 32 porte une partie en forme de T 44 dont l'extrémité est reçue dans un logement 46 formé dans un second disque 48 également monté coulissant à l'intérieur de l'alésage 30. L'extrémité de la partie en forme de T 44 est maintenue à l'intérieur du logement 46 par un rebord 50 du disque 48. Dans la variante de réalisation de la figure 1, des moyens élastiques sont disposés entre les disques 32 et 48 et, plus précisément, entre le disque 32 et le rebord 50 afin de solliciter les disques en éloignement l'un de l'autre. Ces moyens élastiques sont constitués par un empilement de rondelles élastiques 52. Bien entendu, les rondelles Belleville 52 pourraient être remplacées par tout système équivalent tel qu'un ressort hélicoïdal.

Le disque 48 est solidaire d'une tige 54 qui s'étend en éloignement du disque 32 au travers d'une partie de diamètre réduit de l'alésage 30. La tige 54 et le disque 48 sont immobilisés en rotation par une clavette 56 reçue dans une rainure de clavette appropriée formés dans la partie 14 du boîtier. La tige 54 est filetée et reçoit un écrou 58 monté tournant à l'intérieur des parties 14 et 16 du boîtier et immobilisé en translation entre ces parties par des butées à bille 60. La partie 16 du boîtier est solidarisée de la partie 14 au moyen de tirants 61 et centrée sur la partie 14 par un embrèvement, de sorte que l'axe d'un alésage 63 formé dans la partie 16 soit aligné avec l'axe de l'alésage 30 et avec l'axe de l'orifice d'entrée 20.

L'alésage 63 reçoit l'extrémité libre de la tige fileté 54 et une partie de l'écrou 58 sur laquelle est monté un manchon d'entraînement 64 solidarisé en rotation de l'écrou 58 au moyen d'une clavette 66 fixée à l'écrou et reçue dans une rainure de clavette appropriée formée dans le manchon 64. Comme on l'a représenté schématiquement sur la figure 1, la partie 16 du boîtier définit à son extrémité supérieure une bride prévue pour supporter un moteur d'entraînement (non représenté) dont l'arbre de sortie 65 entraîne en rotation le manchon 64 par l'intermédiaire d'un système de crabotage 62. On comprend que la rotation du manchon 64 entraîne la rotation de l'écrou 58 grâce à la clavette 66. L'écrou 58 étant immobilisé en translation entre les butées 60 alors que la tige fileté 54 est immobilisée en rotation par la clavette 56, il en résulte une translation de la tige 54 et du disque 48 le long de leur axe. Le déplacement du disque 48 est transmis au disque 32 et donc au clapet 38 par la liaison avec jeu définie entre l'extrémité de la partie en forme de T 44 et le logement 46, ladite extrémité étant normalement plaquée contre le rebord 50 sous l'action des rondelles élastiques 52. Le système mécanique ainsi constitué permet donc de déplacer le clapet 38 selon l'axe de l'orifice d'entrée 20 lors de l'actionnement du moteur dont l'arbre de sortie 65 est représenté sur la figure 1.

Le fonctionnement du dispositif d'isolement représenté sur la figure 1 est le suivant.

En fonctionnement normal, c'est à dire lorsque la soupape de sureté disposée en aval du dispositif 10 fonctionne correctement, les différentes parties de ce dispositif occupent les positions représentées sur la figure. Ainsi, le moteur porté par la bride de la partie 16 due boîtier maintient par l'intermédiaire du manchon 64 et de l'écrou 58 la tige 54 et le disque 48 dans la position haute représentée sur la figure 1. Dans cette position, le clapet 38 est sollicité en éloignement de son siège 24 par suite de la coopération du l'extrémité de la partie en forme de T 44 avec le rebord 50 du disque 48.

Lorsqu'une défaillance de la soupape de sureté conduit à un blocage de cette soupape en position ouverte, le moteur (non représenté) peut être commandé soit automatiquement, soit manuellement afin d'entraîner en rotation par l'intermédiaire du système de crabotage 62 le manchon 24 et l'écrou 58. La rotation correspondante de l'écrou 58 a pour conséquence de commander le déplacement vers le bas en considérant la fig. 1 de l'ensemble constitué par la tige 54 et par le disque 48. Au cours de ce déplacement et par suite de l'action des rondelles Belleville 52, la tête de la partie en forme de T 44 reste d'abord en contact avec la rondelle 50 jusqu'à ce que le clapet 38 vienne en appui étanche contre le siège de valve 24. Le déplacement de la tige 54 et du disque 48 se poursuit alors légèrement, afin de garantir l'efficacité de l'étanchéité du contact entre le clapet 38 et son siège 24. Ainsi, l'obturation de l'orifice d'entrée 20 par le clapet 38 résulte de l'action des moyens de tarage que constituent les rondelles Belleville 52. De plus, comme on l'a déjà mentionné, le dimensionnement respectif du logement 46 formé dans le disque 48 et de la tête de la partie en forme de T 44 reçue dans ce logement définit entre les deux organes mobiles que constituent les disques 32 et 48 une liaison avec jeu qui permet au clapet 38 de se déplacer en éloignement de son siège 24 à l'encontre de la force exercée par les rondelles Belleville 52 lorsque la pression dans le circuit en amont du dispositif d'isolement 10 est supérieure à une valeur prédéterminée par le tarage des rondelles élastiques.

Ainsi, le dispositif d'isolement selon l'invention permet d'intervenir automatiquement ou manuellement en cas de blocage en position ouverte de la soupape de sureté disposée en aval sur la conduite sans que la protection du circuit aux suppressions ne soit supprimée. En effet, le tarage des rondelles Belleville peut être conçu de façon à assurer l'ouverture de la soupape que constitue la clapet 38 et le siège 24 pour une pression égale à la pression d'ouverture de la soupape de sureté protégée par le dispostif 10. On remarquera que l'échappement du fluide en cas de surpression en amont du dispositif 10 s'effectue par la soupape de sureté disposée en aval, qui se trouve alors par hypothèse en position ouverte.

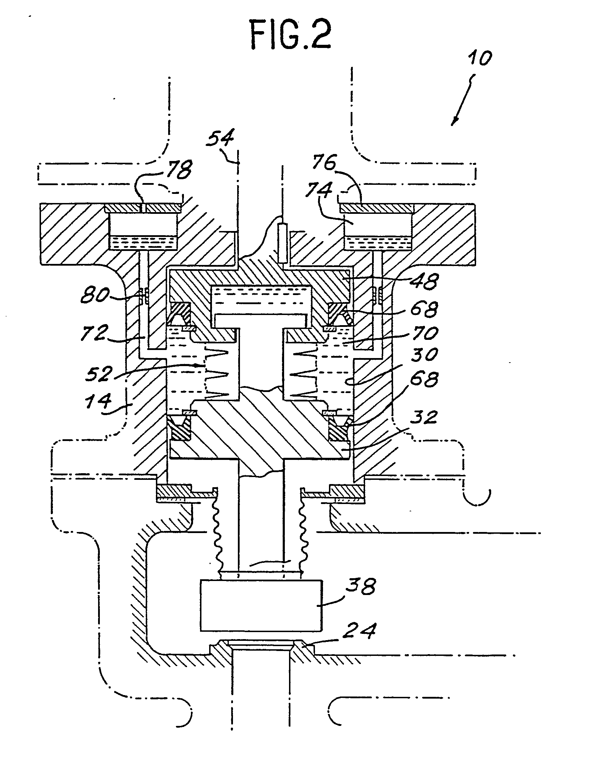

Le dispostif d'isolement représenté sur la fig. 2 est identique au dispositif d'isolement qui vient d'être décrit en se référant à la fig. 1 mais comprend de plus un amortisseur hydraulique permettant d'amortir les battements du clapet lorsque celui-ci a été amené en contact étanche avec son siège par suite d'une défaillance de la soupape de sureté disposée en aval et se trouve sollicité en éloignement de ce siège sous l'effet d'une augmantation de la pression amont excédant la pression de tarage exercée par les rondelles élastiques.

De façon plus précise, dans la dispositif d'isolement représenté sur la fig. 2, les disques 32 et 48 constituent des pistons qui portent chacun un joint d'étanchéité annulaire 68 qui coopère avec l'alésage 30 de façon à définir une chambre étanche 70 remplie d'un fluide hydraulique tel que de l'huile à vérin. La chambre 70 communique par des passage 72 avec une chambre annulaire 74 disposée au-dessus de la chambre 70 et à l'intérieur de la partie 14 du boîtier. La chambre 74 est obturée à sa partie supérieure par une plaque 76 dans laquelle sont formés des évents 78 qui communiquent avec l'atmosphere. La partie inférieure du réservoir 74 est remplie d'huile ainsi que les passages 72 qui débouchent dans le fond du réservoir, alors que la partie supérieure du réservoir 74 est remplie d'air et communique avec l'atmosphère par les évents 789. Ainsi, le tiers inférieur du réservoir 74 peut être rempli d'huile à vérin et présenter une surface libre en contact avec l'air contenu dans la partie supérieure. Enfin, des diaphragmes 80 sont disposés dans les passages 72 afin de limiter la vitesse d'écoulement de l'huile entre les chambres 70 et 74.

Le dispositif qui vient d'être décrit en se référant à la fig. 2 constitue un amortisseur hydraulique qui permet de supprimer les phénomènes de battements du clapet 38 en cas de surpression en amont du dispositif d'isolement 10 et après actionnement de ce dispositif résultant d'une défaillance de la soupape de sureté (non représentée) disposée en aval. Ce phénomène de battements bien connu .des spécialistes de la technique, se produit lorsque la pression en amont d'une soupape de sureté revient contienuellement au-dessus du seuil de déclenchement de cette soupape dès que celle-ci se referme.

Le dispositif de la fig. 2 amortit les déplacements du clapet 38 et permet ainsi de supprimer ou au moins d'atténuer ces phénomènes de battement. Ces amortissement est obtenu par les diaphragmes 80 qui interdisent au piston 32 et au clapet 38 qui lui est associé de se déplacer trop rapidement à l'intérieur de l'alésage 30 en limitant la vitesse de passage de l'huile entre la chambre 70 et la chambre 74. Ainsi, si l'on suppose que la pression en amont du dispositif 10 s'élève suffisamment pour solliciter le clapet 38 en éloignement de son siège 24 à l'encontre de la force exercée par les rondelles Belleville 52 après une mise en oeuvre du dispositif 10 au moyen du moteur (non représenté), le déplacement du piston 32 qui en résulte fait passer une partie de l'huile contenue dans la chambre 70 dans la chambre 74 par les passages 72. La pression en amont du dispositif 10 diminue alors, de sorte que le clapet 38 tend à redescendre vers son siège 24 sous l'action des rondelles Belleville 52. Cependant, ce mouvement est freiné par le fait qu'il nécessite une augmentation du volume de l'huile contenu dans la chambre 70 exigeant le passage d'un certain volume d'huile de la chambre 74 vers la chambre 70 par les diaphragmes 80. Le mouvement du clapet 38 se trouve ainsi freiné, de sorte qu'il ne peut pas venir en appui contre son siège 24 si la pression en amont monte très rapidement. On voit que le phénomène de battement se trouve ainsi pratiquement supprimé.

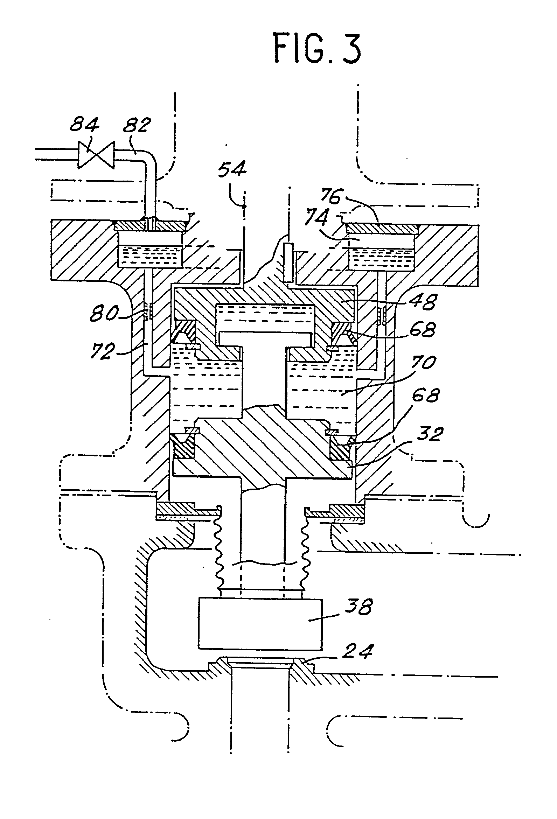

Le mode de reálisation de la fig. 3 constitue une variante du mode de réalisation de la fig. 2, dans laquelle les rondelles Belleville 52 assurant le tarage du clapet 38 lorsque celui-ci obture le siège de valve 24 sont remplacées par une mise sous pression de l'huile contenue dans les chambres 70 et 74 remplissant la même fonction.

De façon plus précise, au lieu de communiquer avec l'atmosphère par des évents formés dans la plaque 76 disposée à la partie supérieure de la chambre 74 comme dans la variante de réalisation de la fig. 2, la chambre annulaire 74 communique au travers de la plaque 76 avec une tuyauterie 82 équipée d'une valve de remplissage 84. Ainsi, la chambre 74 est totalement étanche lorsque la valve 84 est fermée. La tuyauterie 82 communique avec une source de gaz neutre comprimé (non représentée), de tells sorte que la partie supérieure de la chambre 74 est remplie, par exemple jusqu'à la moitié du volume total de cette chambre, de gaz neutre sous pression au moyen de la valve 84 qui est ensuite fermée. Ce gaz sous pression est en contact avec la surface libre de l'huile contenue dans le chambre 74, de sorte qu'il egit ainsi sur l'huile contenue dans la chambre 70 pour exercer une pression de tarage prédéterminée sur le piston 32. La pression du gaz introduit dans la partie supérieure de la chambre 74 définit ainsi le seuil de déclenchement de la soupape de sureté que constituent le clapet 38 et son siège 24 lorsque cette soupape est fermée par suite d'une mise en oeuvre du moteur (non représenté) consécutive à un blocage de la soupape de sureté disposée en aval en position ouverte. Comme dans la variante de la fig. 2, des diaphragmes 80 disposés dans les passages 72 par lesquels la chambre 74 communique avec la chambre 70 permettent d'assurer un amortissement des battements du clapet 38. Dans cette variante, on remarquera les joints d'étanchéité 68 associés aux pistons 32 et 48 peuvent éventuellement être remplacés par un soufflet.

Comme le mode de réalisation de la fig. 1, les modes de réalisation des fig. 2 et 3 présentent l'avantage essentiel de permettre une fermeture du circuit en dépit d'un blocage en position ouverte d'une soupape de sureté disposée en aval tout en continuant d'assurer une protection de ce circuit contre les surpressions.

## Revendications

1. Dispositif d'isolement prévu pour être disposé dans un circuit et comprenant un clapet (38) susceptible de venir en appui étanche sur un siège de valve (24) formé dans ledit circuit, des moyens de neutralisation ou de commande (64, 58, 54, 48, 32) maintenant normalement le clapet (38) éloigné de son siège (24), ces moyens pouvant être actionnés pour amener le clapet en appui étanche contre son siège lorsqu'il est nécessaire d'isoler le circuit, et des moyens de tarage (52, 82) agissant sur ledit clapet lorsqu'il est en appui étanche contre son siège pour lui permettre de s'éloigner de ce dernier lorsque la pression en amont du dispositif d'isolement (10) dépasse une valeur prédéterminée, lesdits moyens de neutralisation comprenant un système mécanique comportant un premier organe (32) solidaire du clapet (38) et un deuxième organe (48) mobile selon le sens de déplacement du clapet sous l'action desdits moyens de neutralisation, une liaison avec jeu (44, 46) étant prévue entre lesdits organes pour permettre normalement au deuxième organe (48) d'agir sur le premier organe (32) afin de maintenir le clapet (38) éloigné de son siège (24) et pour permettre au premier organe (32) de se déplacer par rapport au deuxième organe (48) lorsque le clapet se déplace en éloignement de son siège à l'encontre des moyens de tarage (52, 82) lorsque la pression en amont du dispositif d'isolement (10) dépasse ladite valeur prédéterminée après la mise en oeuvre desdits moyens de neutralisation, les moyens de tarage comprenant des moyens élastiques (52) disposés entre le premier organe (32) et le deuxième organe (48), ledit dispositif étant caractérisé en ce qu'il comprend entre lesdits organes (32, 48) un amortisseur hydraulique (70, 72, 74, 80) agissant sur le clapet (38) au moins lorsqu'il est en appui étanche contre son siège (24), en ce que chacun desdits organes (32, 48) comprenant une partie en forme de piston reçue en coulissement dans un alésage (30) de façon à définir une première chambre étanche (70) remplie de fluide hydraulique, qui communique avec une deuxième chambre (74) par l'intermediaire d'un moins un orifice d'étranglement (80), la deuxième chambre (74) étant remplie partiellement d'air qui communique avec l'atmosphère par l'intermédiaire d'au moins un évent (78).

2. Dispositif d'isolement selon la revendication 1, modifié en ce que la deuxième chambre (74) nemplie partiellement d'air et comportant au moins un évent, est remplacée par une chambre (74) qui est étanche et dans laquelle est introduit un volume de gaz comprimé définissant lesdits moyens de tarage.

## Claims

1. Shut-off device provided for installation in a circuit which comprises a valve member (38) adapted to bear in fluid-tight manner on a valve seat (24) formed in said circuit, neutralization or command means (64, 58, 54, 48, 32) normally holding the valve member (38) away from its seat (24), said means being actuable to urge said valve member into fluid-tight bearing against its seat when it is necessary to shut off the circuit, and loading means (52, 82) acting on said valve member when it bears in fluid-tight manner against its seat, to enable it to move away from the latter when the pressure upstream of the shut-off device (10) exceeds a predetermined value, the said neutralization means comprising a mechanical system constituted by a first part (32) unitary with the valve member (38), and a second part (48) movable in the direction of displacement of the valve member under the action of said neutralization means, a resilient link (44, 46) being provided between said parts to permit said second part (48) normally to act on the first part (32) whereby to hold the valve member (38) away from its seat (24), and to permit displacement of the first part (32) with respect to the second part (48) when the valve member is displaced away from its seat against the loading means (52, 82) when the pressure upstream of said shut-off device (10) exceeds said predetermined valve after the operation of said neutralization means, the loading means comprising resilient means (52) located between the first part (32) and the second part (48), said device being characterized in that it comprises, between the said parts (32, 48), a hydraulic damper (70, 72, 74, 80) acting on the valve member (38) at least when it bears in fluid-tight manner against its seat (24), and in that each of said parts (32, 48) comprises a portion in the form of a piston slidably received in a bore (30), whereby to define a first fluid-tight chamber (70) filled with hydraulic fluid, which communicates with a second chamber (74) by way of at least one choke (80), the second chamber (74) being partially filled with air which is in communication with the atmosphere through at least one vent (78).

2. Shut-off device according to Claim 1, modified in that the second chamber (74) partially filled with air and having at least one vent, is replaced by a chamber (74) which is fluid-tight and which contains a volume of compressed gas providing said loading means.

**Patentansprüche**

1. Absperrvorrichtung zur Anordnung in einem Kreislauf, mit einer Ventilklappe (38), die in dichter Anlage gegen einen in dem Kreislauf ausgebildeten Ventilsitz (24) bringbar ist, Ausgleich- oder Steuereinrichtungen (64, 58, 54, 48, 32), die die Ventilklappe (38) normalerweise von ihrem Sitz (24) entfernt halten, wobei diese Einrichtungen betätigbar sind, um die Ventilklappe in dichter Anlage gegen ihren Sitz zu bringen, wenn es notwendig ist, den Kreislauf abzusperren, und Abgleicheinrichtungen (52, 82), welche auf die Ventilklappe (38) wirken, wenn diese sich in dichter Anlage gegen ihren Sitz befindet, damit sich diese von dem Sitz entfernen kann, wenn der Druck stromaufwärts der Absperreinrichtung (10) einen vorbestimmten Wert überschreitet, wobei die Ausgleichseinrichtungen ein mechanisches System mit einem ersten, fest mit der Ventilklappe (38) verbundenen Organ (32) und einem zweiten, je nach Richtung der Verlagerung der Ventilklappe (38) unter der Wirkung der Ausgleichseinrichtungen beweglichen Organ (48) sowie eine spielbehaftete Verbindung (44, 46) zwischen den Organen umfassen, damit normalerweise das zweite Organ (48) auf das erste Organ (32) wirken kann, um die Ventilklappe (38) von ihrem Sitz (24) entfernt zu halten, und damit sich das erste Organ (32) bezüglich des zweiten Organs (48) verschieben kann, wenn sich die Ventilklappe (38) entgegen der Abgleicheinrichtungen (52, 82) von ihrem Sitz (24) entfernt, wenn der Druck stromaufwärts der Absperrvorrichtung (10) den vorbestimmten Wert überschreitet, nachdem die Ausgleicheinrichtungen in Betrieb genommen worden sind, wobei die Abgleicheinrichtungen elastische Elemente (52) umfassen, die zwischen dem ersten Organ (32) und dem zweiten Organ (48) angeordnet sind, und die Vorrichtung ist dadurch gekennzeichnet, daß die Absperrvorrichtung zwischen den organen (32, 48) eine hydraulische Dämpfungseinrichtung (70, 72, 74, 80) umfasst, die auf die Ventilklappe (38) zumindest dann wirkt, wenn sich diese in dichter Anlage gegen ihren Sitz (24) befindet, und daß jedes der Organe (32, 48) einen Abschnitt in form eines Kolbens umfasst, der gleitend in einer Bohrung (30) derart liegt, daß eine erste, dichte Kammer (70) begrenzt wird, die mit Hydraulikflüssigkeit gefüllt ist und die mit einer zweiten Kammer (74( über mindestens eine Drosselöffnung (80) in Verbindung steht, wobei die zweite Kammer (74) teilweise mit Luft gefüllt ist, die über mindestens eine Lüftungsöffnung (78) mit der Atmosphäre in Verbindung steht.

2. Absperrvorrichtung nach Anspruch 1, dadurch abgeändert, daß die zweite Kammer (74), die teilweise mit Luft gefüllt ist und mindestens eine Lüftungsöffnung umfaßt, durch eine Kammer (74) ersetzt ist, die abgedichtet ist und in die ein Volumen komprimierten Gases eingeführt ist, daß die Abgleicheinrichtungen bildet.

**0 037 334**

FIG.1

1

# FIG.2

# FIG. 3